# EUROPEAN PATENT SPECIFICATION

(11) **EP 4 063 581 B1**
(45) Date of publication and mention of the grant of the patent: **13.09.2023**
(21) Application number: 21164102.2
(22) Date of filing: 22.03.2021
(51) Int. Cl.: E04D 11/00, A01G 9/033, D03D 11/02

(54) **MODULAR UNIT FOR A GREEN ROOF**
MODULARE EINHEIT FÜR EIN GRÜNES DACH
UNITÉ MODULAIRE POUR UN TOIT VERT

(43) Date of publication of application: 28.09.2022
(73) Proprietor: Sam Groofing Tech B.V., 2612 HJ Delft (NL)
(72) Inventor: Blaakman, Mark Leonard Wilhelmus, 5175 BH Loon op Zand (NL); Borra, Hans Antonius, 3707 TB Zeist (NL); van der Hart, Bartholomeus Leonardus Maria, 2631 PW Nootdorp (NL); Vermeer, Adrianus Maria Antonius, 5071 EE Udenhout (NL)
(74) Representative: De Vries & Metman

(56) References cited:
- WO-A1-2012/033259
- CA-A1- 2 809 383
- CN-U- 202 280 212
- GR-B- 1 007 523
- JP-A- 2010 220 591
- KR-A- 20130 033 584
- US-A1- 2015 334 926
- US-B1- 6 606 823
- US-B1- 7 997 027

## Description

The invention relates to a green roof, in particular a flat green roof or a substantially flat green roof, comprising a plurality of modular units comprising a drainage component, a substrate for vegetation, and vegetation.

Green roofs, also known as vegetation roofs, are booming worldwide. Due to ongoing urbanization, environmental issues, the urban heat island effect, etc., the demand for more green in, in particular, cities is increasing. Roofs are a suitable place to meet the demand for more vegetation. Subsidy schemes are available in more and more cities to encourage homeowners to invest in a green roof. These subsidies are often based on the water retention capacity of the roof (typically expressed in liters of water retainable per square meter). Building a vegetation roof is a labor-intensive process because such roofs are composed of several layers.

US 2010/064580 relates to a multilayer vegetation support system, which includes a reservoir substrate and an overlying composite, wherein a growing medium and vegetation are disposed on an exposed surface of the composite. The reservoir substrate is a generally planar member having a plurality of recesses or dimples, and can include a plurality of drain apertures in land areas intermediate the dimples. The composite includes a water retention layer, a root barrier layer and a multitude of projecting loops, wherein a growing medium and vegetation overlie and intertwine with the projecting loops.

US 2002/007591 relates to a modular green roof system, which includes modular panels, also referred to as pans or containers, providing a surrounded space suitable for supporting live plant growth and adapted for installing onto a roof deck in side-by-side positioning while allowing water flow on the roof thereunder. The panels are installed with growing medium and greenery, and are releasably connected in a non-progressive manner that permits removal of a surrounded panel without disturbing the adjacent panels. The panels are further adapted to be pre-seeded prior to delivery to the roof site, and delivered in either a preserved condition or a germinated condition; and are adapted for connection to an edge finishing/edge termination system and support structure to enable provision of non-panel areas of the green roof, and above-panel structures.

US 2020/095770 relates to a stormwater management apparatus and method including a water storage component, and a drainage component. The water storage component, and protective component form a composite that allows for stormwater to be retained to an appropriate extent, and for excess stormwater to be adequately controlled. The water storage component and drainage component are provided in a single unit. The embodiment shown in Figure 5C of US 2020/095770 comprises multiple fleeces stitched together. CN 202 280 212 U discloses yet another green roof.

It is an object of the present invention to provide a modular green roof that simplifies logistics, that can be installed in a relatively straightforward manner and/or that facilitates recycling when the green roof is removed.

To this end, a green roof is provided in accordance with claim 1. In said roof, the flexible layer containing the substrate is fixed to the rigid carrier, e.g. mechanically, such as by means of nails, staples, rivets, plugs, screws or bolts, or chemically, e.g. by means of an adhesive.

The modular units of the green roof according to the present invention are lightweight and provide good resistance to forces exerted on it during storage, transport and installation. The units simplify logistics and can be installed in a straightforward manner, in particular by placing the units on a roof, next to each other in a desired or pre-designed pattern and preferably interlocking, without the need of providing, e.g. depositing and spreading, at the construction site, the substrate and/or vegetation. The units save labor, improve ergonomics, reduce or avoid the risk of spilling, in particular at the construction site, and/or facilitate installation of the green roof. The pocket or pockets facilitate precisely defining the amount and/or the composition of the substrate. Further, the pockets facilitate a more homogenous distribution of the substrate over the roof.

At the end of the life span of the green roof, the vegetation will have formed a mat-like structure that can be removed relatively easily from the carriers, facilitating recycling of both.

Suitable substrates include perlite, lava, bims, crushed ceramic tiles, compost, peat, or a composition containing one or more of these components. In general, it is preferred that the substrate is granular and/or porous and/or contains no or a limited amount of organic material, e.g. less than 35 wt%, preferably less than 25 wt%, preferably optimum for sufficient and fast growth of the vegetation, because these properties improve retention of water and nutrients for the vegetation layer and improve the ratio of the weight of the dry substrate to the weight of the wetted substrate.

In an embodiment, the flexible layer is made from a biodegradable synthetic material, preferably a biodegradable thermoplastic polymer, such as polylactic acid (PLA).

Biodegradable plastics are plastics that decompose by the action of living organisms, usually microbes, into water, carbon dioxide, and biomass. In the present context, the biodegradable flexible layer will typically loose its capability to contain the substrate and roots after 5 to 10 years, more specifically between 6 and 8 years. Once the flexible layer is decomposed significantly, the vegetation, the roots of the vegetation, and the substrate form a more or less continuous layer extending over the carriers of the modular units forming the roof.

In an embodiment, the carriers interlock, preferably by means of elements that overlap or fit together preferably by sliding a carrier perpendicular to the surface of the roof and relative to a carrier of an adjoining module carrier. Thus, the units can be mosaiced together quickly, providing a secure connection between the units.

In another embodiment, the carriers provide a flat support surface for the flexible layer and comprise a relatively thick and/or stiff rim. In a refinement, the flat support surface comprises a network of bars, regular, such as a grid, or irregular, such as bars obtained through generative design, i.e., iterative design that uses the power of computing to fine-tune, with constraints, to get a (near) optimum-performing design.

These are effective ways to provide a carrier that is relatively lightweight, yet provides sufficient strength and stiffness to handle the modular unit, and that is essentially open, providing essentially unobstructed drainage. E.g., during rain the substrate absorbs rainwater until the substrate is saturated. Rainwater that is not absorbed falls through and to a drain or sewer, preventing high concentrations of water in the substrate. It is preferred that the carrier is at least 50%, preferably at least 70%, open.

In an embodiment, the carrier is made from a synthetic material, such as a thermoplastic polymer, e.g. polypropylene, polyester, or ABS, and optionally composed of or containing post-consumer recycled material(s). In an example, the carrier is made by means of injection molding.

The carrier is rigid, i.e. retains its shape during normal use (transport, installation) sufficiently to performs its function (supporting the flexible layer, including substrate and vegetation). It is preferred that the rigidity of the carrier is such that when the modular unit, in a dry state, is held at two opposite edges, the carrier bends less than 50 mm, preferably less than 30 mm, preferably less than 20 mm in the middle (halfway between the held edges) for each meter between the held edges.

In an embodiment, the units have a length and width in a range from 60 to 160 centimeters, preferably in a range from 80 to 120 centimeters, and/or a length to width ratio in a range from 1,3 to 1,7, preferably in a range from 1,4 to 1,6. These oblong configurations allow flexible laying patterns, facilitating shaping the green roof around features on the roof, such as chimneys, and to keep the surface area between the green roof and the rim of the roof limited.

In another embodiment, the vegetation comprises plug plants, e.g. extensive plants, such as sedum, or semi-extensive plants, such as grasses, herbs (chives, thyme, lavender, etc.), and perennials, extending through the walls of the pockets and into the substrate. By using plug plants instead of a fully grown layer of vegetation, such as a sedum mat, the vegetation layer matures/grows on the roof, which in turn enables more efficient use of (existing) nurseries for vegetation. In an example, a plug plant is provided for every 200 to 600 square centimeter of top surface of the modular units, reducing the required surface area in the nursery with a factor of at least 10, preferably at least 20. Factors up to 60 or more are possible, in particular in case of small diameter plug plants.

In an embodiment, the flexible material comprises a backing layer and a further layer attached to the backing layer and forming the pockets.

In a refinement, the further layer comprises folds forming the pockets. In a refinement, the backing layer has a thickness of at least 1 millimeter, preferably at least 3 millimeters. In a further refinement, the backing layer functions as a retention layer, e.g., providing a water retention of at least 1 liter per square meter, preferably at least 2 liters per square meter, preferably at least 5 liters per square meter. In an embodiment, the flexible layer comprises an anti-root barrier, preferably as its bottom surface.

In an embodiment, the flexible layer, where applicable the backing layer and/or the further layer, is made from a textile material, preferably a nonwoven material, in particular a biodegradable nonwoven material.

In an embodiment, the pockets filled with substrate have a height in a range from 3 to 15 centimeters, preferably in a range from 4 to 8 centimeters, a width in a range from 10 to 40 centimeters, preferably in a range from 15 to 30 centimeters, a length in a range from 60 to 160 centimeters, preferably in a range from 80 to 120 centimeters, and/or the at least one flexible layer comprises at least 3 pockets, preferably at least 4 pockets.

In an embodiment, adjacent pockets of a module abut or are less than 4 centimeter, preferably less than 2 centimeters apart.

The green roof can, e.g., be a flat roof or a substantially flat roof, the latter having an inclination angle of 15° or less, comprising a roof surface, e.g. a decking, a water-resistant, ideally waterproof, and preferably root-resistant layer covering the roof surface, typically to prevent water from penetrating the roof surface, and a plurality of modular units according to any one of the preceding claims installed on the roof, in particular directly on the water resistant layer.

In an embodiment, the green roof comprises a wall or wall segments, e.g. a raised edge or panels, extending along the perimeter of the installed modular units.

Such a wall provide a tidy demarcation of the green roof from the rest of the roof and, in case of a flexible layer made from a biodegradable material, keeps the substrate in place when the flexible layer decomposes.

In another embodiment, the modular units at the periphery of the green roof have a flexible layer made from a non-biodegradable material and the modular units inside from these peripheral units have a flexible layer made from a biodegradable material. Thus, the peripheral units will keep the substrate in place when the flexible layers in the center of the green roof decompose.

In an embodiment, the substrate in the flexible layer provides a water retention of at least 10 liters per square meter of the layer, preferably at least 20 liters per square meter. Thus, the substrate serves as a substantial buffer for water and helps reduce peak loads on sewage, for instance during heavy rain. Water retention can be adjusted to a specific design by selecting the height of and the amount of substrate in the pockets.

To enhance protection from strong winds, the connection between carriers or modular units can be reinforced with beams or rails extending over and preferably connected to a plurality of carriers and/or modular units.

Further, the carriers or modular units can be provided with mounting elements for solar panels, facilitating the installation of such panels.

The invention will now be explained with reference to the figures, in which an example of the invention is shown.
Figure 1 is a perspective view of a carrier for a modular unit for a green roof in accordance with the present invention.
Figure 2 is a perspective view of a panel used in the carrier shown in Figure 1.
Figure 3 is a perspective view of a modular unit for a green roof in accordance with the present invention.
Figure 4 is a side view of a stack of modular units shown in Figure 3.
Figure 5 illustrates the process of laying and interlocking modular units to construct a green roof on an existing flat roof.
Figure 6 is a perspective top view of a green flat roof according to the present invention.

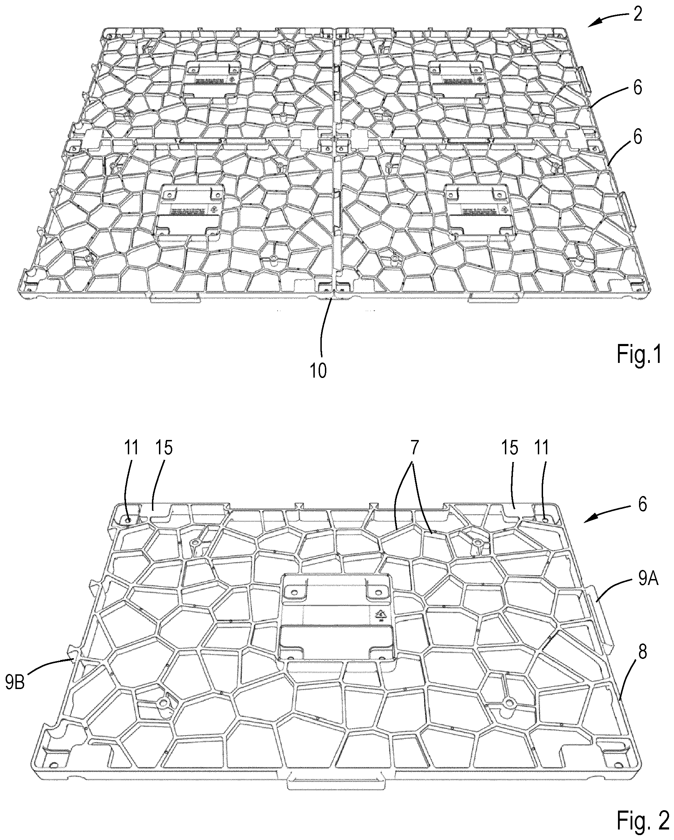

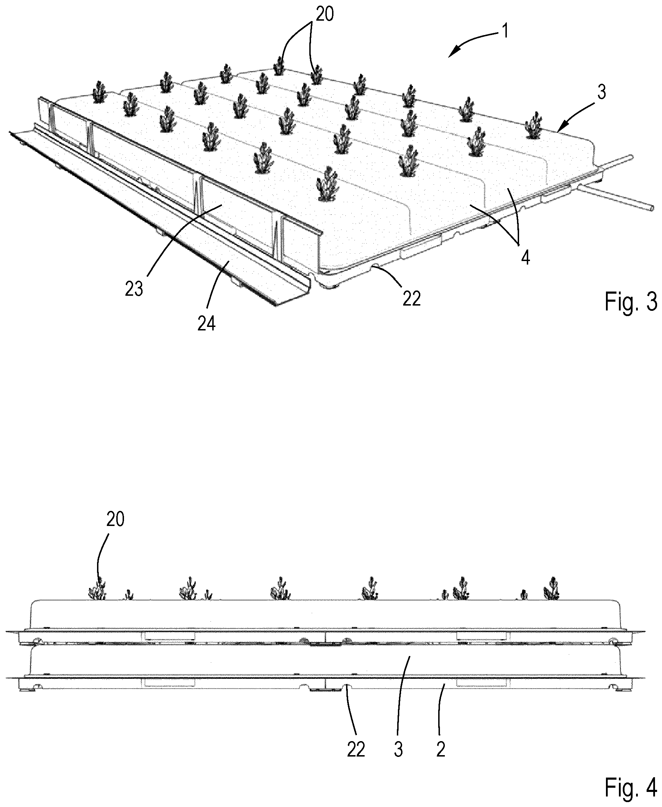

Figures 1 to 3 show a modular unit 1 for use in a flat green roof. The unit comprises a carrier 2, which doubles as a drainage component, and a flexible layer 3 (Figure 3) supported on the rigid carrier. The flexible layer comprises a plurality of closed pockets 4, e.g. four pockets running the length the modular unit 1. Each of the pockets contains a granular substrate, such as perlite.

In this example, the carrier comprises four panels 6. Each panel comprise a flat surface formed by a network of bars 7, which network was shaped through generative design. A relatively thick and stiff rim 8 surrounds the flat surface, providing strength and stiffness to the modular unit. The carrier shown in the Figures is 73% open.

The outwardly facing surfaces of each rim are provided with mating elements 9A, 9B, which interlock to form the carrier 2. The four panels are furthermore fixed relative to each other by means of connectors 10, in this example of elements that bridge the rims of two or more adjacent panels and are hooked or snap-fitted into openings 11 an each corner of the panels.

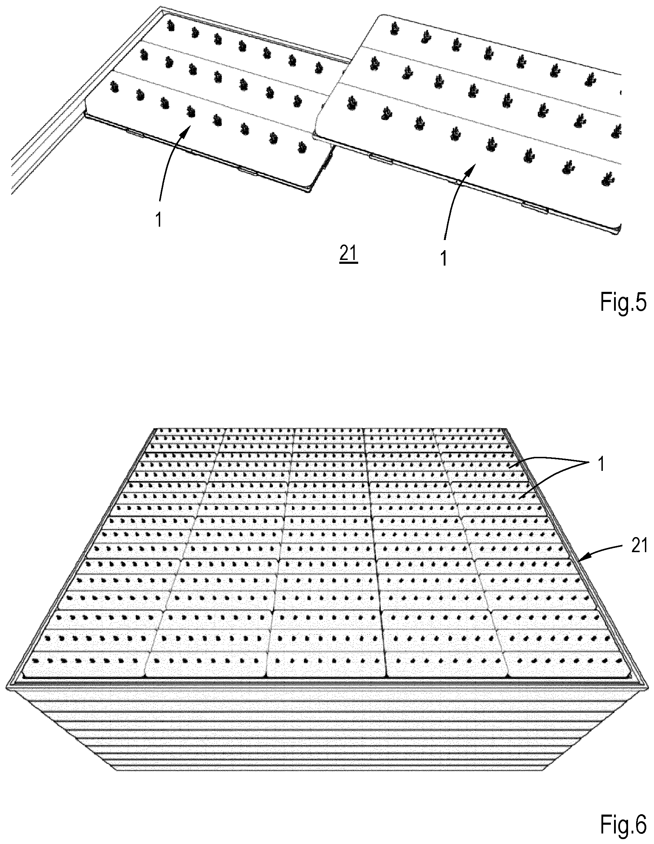

The mating elements 9A, 9B, and optionally also the connectors, are also used to join adjacent modular units, as illustrated in Figure 5.

The panels also comprise means to attached the flexible layer to the carrier, in this example plates 15 near each corner of the panels 6 for receiving and holding rivets or staples (not shown) that are forced, e.g. shot or punched, through at least the bottom of the flexible layer 3 and the plates 6, providing a secure connection been the flexible layer and the carrier beneath it.

The flexible layer comprises a backing or bottom layer made from a relatively thick nonwoven, in this example from a needle felt and an upper layer made from a calendered fleece, which is longer and wider than the backing layer. The fleece is attached to the backing layer by straight stitches extending over the backing layer, from one of the short edges to the other short edge, creating the pockets 4. Further stitches are applied to attach a short edge of the upper layer to a short edge of the backing layer, to close the pockets on one end. Next, the pockets are filled with a substrate, in this example perlite. Filling can be carried out manually or automatically. Next, backing and fleece are stitched together at the remaining end, thus closing the pockets completely and defining oblong, parallel, adjacent, and abutting pockets, filled with substrate.

The backing layer and the calendered fleece in this illustrative example are made from a biodegradable thermoplastic polymer, such as polylactic acid (PLA).

Further, in this example, the flexible layer with the pockets and the carrier have a length of 120 centimeter and a width of 0,8 meter, corresponding to the footprint of a Europallet.

As shown in Figures 3 to 6, the top surfaces of the pockets are provided with openings, e.g. slits, and plug plants, in particular sedum plugs 20, have been inserted through the openings and into the substrate.

The modular units are thus ready stacking on a pallet (Figure 4) and for storage and transport to a building site. At a building site, the modular units are taken from the stack, lifted on a roof, and placed on the roof such that the carriers of adjoining interlock, as illustrated in Figure 5, and the layout corresponds to the layout of the roof, as illustrated in Figure 6.

The invention is not limited to the described embodiments and can be varied within the framework of the claims. For instance, the carriers 2 can be provided with openings or recesses 22 to facilitate laying cables or conduits beneath the modular units. Also, a wall 23 and/or a gutter 24 can be provided along the perimeter of the installed modular units.

## Claims

1. Green roof, in particular a flat roof or a substantially flat roof, comprising a roof surface, a water resistant layer covering the roof surface, and a plurality of modular units (1), each modular unit comprising vegetation (20), a rigid carrier (2) acting as a drainage component and a flexible layer (3) supported on and fixed to the rigid carrier, which flexible layer comprises at least one pocket (4) containing a substrate for vegetation, wherein the modular units are installed next to each other such that pockets of adjacent modular units abut.

2. Green roof according to claim 1, wherein the flexible layer (3) of a modular unit comprises two or more pockets (4) and the substrate is contained in the pockets (4) .

3. Green roof according to claim 1 or 2, wherein pocket or pockets (4) are closed and envelop the substrate.

4. Green roof according to any one of the preceding claims, wherein the flexible layer (3) is made from a biodegradable synthetic material, preferably a biodegradable thermoplastic polymer, such as polylactic acid (PLA).

5. Green roof according to any one of the preceding claims, wherein the carriers (2) interlock, preferably by means of elements (9A, 9B) that overlap or fit together preferably by sliding a carrier (2) perpendicular to the surface of the roof (21) and relative to a carrier (2) of an adjoining module carrier (1).

6. Green roof according to any one of the preceding claims, wherein the carriers (2) provide a flat support surface (7) for the flexible layer (3) and comprise a relatively thick and/or stiff rim (8).

7. Green roof according to claim 6, wherein the flat support surface comprises a network of bars (7).

8. Green roof according to any one of the preceding claims, wherein the units (1) have a length and width in a range from 60 to 160 centimeters, preferably in a range from 80 to 120 centimeters, and/or a length to width ratio in a range from 1,3 to 1,7, preferably in a range from 1,4 to 1, 6.9.

9. Green roof according to any one of the preceding claims, wherein the vegetation comprises plug plants, in particular sedum plugs (20), extending through the walls of the pockets (4) and into the substrate.

10. Green roof according to any one of the preceding claims, wherein the flexible layer (3) comprises a backing layer and a further layer attached to the backing layer and forming the pockets (4).

11. Green roof according to any one of the preceding claims, wherein flexible layer (4), where applicable the backing layer and/or the further layer, is made from a textile material, preferably a nonwoven material, in particular a biodegradable nonwoven.

12. Green roof according to any one of the preceding claims, wherein the pockets (4) filled with substrate have a height in a range from 3 to 15 centimeters, preferably in a range from 4 to 8 centimeters, a width in a range from 10 to 40 centimeters, preferably in a range from 15 to 30 centimeters, a length in a range from 60 to 160 centimeters, preferably in a range from 80 to 120 centimeters, and/or the at least one flexible layer comprises at least 3 pockets, preferably at least 4 pockets.

13. Green roof according to any one of the preceding claims, wherein the modular units are installed directly on the water resistant layer.

14. Green roof according to claim 13 comprising a wall or wall segments, such as a raised edge or panels, extending along the perimeter of the installed modular units and/or the modular units at the periphery of the green roof have a flexible layer made from a non-biodegradable material and the modular units inside from these peripheral units have a flexible layer made from a biodegradable material.

## Patentansprüche

1. Gründach, im Besonderen ein Flachdach oder ein im Wesentlichen flaches Dach, das eine Dachfläche, eine wasserabweisende Schicht, die die Dachfläche bedeckt, und eine Vielzahl von modularen Einheiten (1) aufweist, wobei eine jede modulare Einheit aufweist: Vegetation (20), einen starren Träger (2), der als Drainagekomponente fungiert, und eine flexible Schicht (3), die auf dem starren Träger gehalten und fixiert wird, wobei die flexible Schicht wenigstens eine Tasche (4) aufweist, die ein Substrat für die Vegetation enthält, wobei die modularen Einheiten nebeneinander so angebracht sind, dass die Taschen der benachbarten modularen Einheiten aneinander stoßen.

2. Gründach nach Anspruch 1, wobei die flexible Schicht (3) einer modularen Einheit zwei oder mehr Taschen (4) aufweist und das Substrat in den Taschen (4) enthalten ist.

3. Gründach nach Anspruch 1 oder 2 wobei
eine Tasche oder Taschen (4) geschlossen sind und das Substrat umschließen.

4. Gründach nach einem der vorhergehenden Ansprüche, wobei die flexible Schicht (3) aus einem biologisch abbaubaren synthetischen Material hergestellt ist, vorzugsweise einem biologisch abbaubaren thermoplastischem Polymer, wie Polyactide (PLA).

5. Gründach nach einem der vorhergehenden Ansprüche, wobei die Träger (2) ineinander greifen, vorzugsweise mittels Elementen (9A, 9B), die überlappen oder zusammenpassen, vorzugsweise durch Verschieben eines Trägers (2) senkrecht zur Fläche des Daches (21) und bezüglich einem Träger (2) eines benachbarten Modulträgers (1).

6. Gründach nach einem der vorhergehenden Ansprüche, wobei die Träger (2) eine flache Tragefläche (7) für die flexible Schicht (3) vorsehen und einen relativ dicken und/oder steifen Rand (8) aufweisen.

7. Gründach nach Anspruch 6, wobei die flache Tragefläche ein Netz aus Balken (7) aufweist.

8. Gründach nach einem der vorhergehenden Ansprüche, wobei die Einheiten (1) eine Länge und Breite in einem Bereich von 60 bis 160 cm, vorzugsweise in einem Bereich von 80 bis 120 cm und/oder ein Längen-Breiten-Verhältnis in einem Bereich von 1,3 bis 1,7, vorzugsweise in einem Bereich von 1,4 bis 1,6 haben.

9. Gründach nach einem der vorhergehenden Ansprüche, wobei die Vegetation Steckpflanzen, im Besonderen Sedumstecklinge (20) aufweist, die durch die Wände der Taschen (4) und in das Substrat verlaufen.

10. Gründach nach einem der vorhergehenden Ansprüche, wobei die flexible Schicht (3) eine Rückschicht aufweist und eine weitere Schicht, die an der Rückschicht angebracht ist und die Taschen (4) ausbildet.

11. Gründach nach einem der vorhergehenden Ansprüche, wobei die flexible Schicht (4), die Rückschicht und/oder die weitere Schicht, sofern anwendbar, aus einem Textilmaterial hergestellt ist/sind, vorzugsweise einem Vliesmaterial, im Besonderen einem biologisch abbaubaren Vlies.

12. Gründach nach einem der vorhergehenden Ansprüche, wobei die mit dem Substrat gefüllten Taschen (4) eine Höhe in einem Bereich von 3 bis 15 cm haben, vorzugsweise in einem Bereich von 4 bis 8 cm, eine Breite in einem Bereich von 10 bis 40 cm, vorzugsweise in einem Bereich von 15 bis 30 cm, eine Länge in einem Bereich von 60 bis 160 cm, vorzugsweise in einem Bereich von 80 bis 120 cm, und/oder die wenigstens eine flexible Schicht wenigstens drei Taschen, vorzugsweise wenigstens vier Taschen aufweist.

13. Gründach nach einem der vorhergehenden Ansprüche, wobei die modularen Einheiten direkt auf der wasserabweisenden Schicht angebracht sind.

14. Gründach nach Anspruch 13, das eine Wand oder Wandsegmente aufweist, wie hochgezogene Kanten oder Platten, die entlang dem Umfang der installierten modularen Einheiten verlaufen und/oder die modularen Einheiten an der Peripherie des Gründachs eine flexible Schicht haben, die aus einem nicht biologisch abbaubaren Material hergestellt ist, und die modularen Einheiten innerhalb dieser peripheren Einheiten eine flexible Schicht haben, die aus einem biologisch abbaubaren Material hergestellt ist.

## Revendications

1. Toit vert, en particulier un toit plat ou un toit sensiblement plat, comprenant une surface de toit, une couche hydrofuge recouvrant la surface de toit, et une pluralité d'unités modulaires (1), chaque unité modulaire comprenant de la végétation (20), un support rigide (2) agissant comme un composant de drainage et une couche souple (3) supportée sur et fixée au support rigide, laquelle couche souple comprend au moins une poche (4) contenant un substrat pour la végétation, dans lequel les unités modulaires sont installées les unes à côté des autres de sorte que les poches d'unités modulaires adjacentes viennent en butée.

2. Toit vert selon la revendication 1, dans lequel la couche souple (3) d'une unité modulaire comprend deux poches (4) ou plus et le substrat est contenu dans les poches (4).

3. Toit vert selon la revendication 1 ou 2, dans lequel la poche ou les poches (4) sont fermées et enveloppent le substrat.

4. Toit vert selon l'une quelconque des revendications précédentes, dans lequel la couche souple (3) est réalisée à partir d'un matériau synthétique biodégradable, de préférence d'un polymère thermoplastique biodégradable, tel que l'acide polylactique (PLA).

5. Toit vert selon l'une quelconque des revendications précédentes, dans lequel les supports (2) s'emboîtent, de préférence au moyen d'éléments (9A, 9B) qui se chevauchent ou s'imbriquent de préférence en faisant coulisser un support (2) perpendiculairement à la surface du toit (21) et par rapport à un support (2) d'un support de module attenant (1).

6. Toit vert selon l'une quelconque des revendications précédentes, dans lequel les supports (2) fournissent une surface d'appui plane (7) à la couche souple (3) et comprennent un rebord (8) relativement épais et/ou rigide.

7. Toit vert selon la revendication 6, dans lequel la surface d'appui plane comprend un réseau de barreaux (7).

8. Toit vert selon l'une quelconque des revendications précédentes, dans lequel les unités (1) ont une longueur et une largeur dans une plage de 60 à 160 centimètres, de préférence dans une plage allant de 80 à 120 centimètres, et/ou un rapport longueur sur largeur dans une plage allant de 1,3 à 1,7, de préférence dans une plage allant de 1,4 à 1,6.9.

9. Toit vert selon l'une quelconque des revendications précédentes, dans lequel la végétation comprend des boutures, notamment des boutures de sédum (20), s'étendant à travers les parois des poches (4) et dans le substrat.

10. Toit vert selon l'une quelconque des revendications précédentes, dans lequel la couche souple (3) comprend une couche de renfort et une couche supplémentaire attachée à la couche de renfort et formant les poches (4).

11. Toit vert selon l'une quelconque des revendications précédentes, dans lequel la couche souple (4), le cas échéant la couche de renfort et/ou la couche supplémentaire, est réalisée à partir d'un matériau textile, de préférence d'un matériau non tissé, en particulier d'un non tissé biodégradable.

12. Toit vert selon l'une quelconque des revendications précédentes, dans lequel les poches (4) remplies de substrat ont une hauteur dans une plage allant de 3 à 15 centimètres, de préférence dans une plage allant de 4 à 8 centimètres, une largeur dans une plage allant de 10 à 40 centimètres, de préférence dans une plage allant de 15 à 30 centimètres, une longueur dans une plage allant de 60 à 160 centimètres, de préférence dans une plage allant de 80 à 120 centimètres, et/ou l'au moins une couche souple comprend au moins 3 poches, de préférence au moins 4 poches.

13. Toit vert selon l'une quelconque des revendications précédentes, dans lequel les unités modulaires sont installées directement sur la couche hydrofuge.

14. Toit vert selon la revendication 13 comprenant une paroi ou des segments de paroi, tels qu'un bord surélevé ou des panneaux, s'étendant le long du périmètre des unités modulaires installées et/ou des unités modulaires à la périphérie du toit vert ont une couche souple réalisée à partir d'un matériau non biodégradable et les unités modulaires à l'intérieur de ces unités périphériques ont une couche souple réalisée à partir d'un matériau biodégradable.
